# EUROPÄISCHE PATENTSCHRIFT

(11) **EP 1 769 185 B1**
(45) Veröffentlichungstag und Bekanntmachung des Hinweises auf die Patenterteilung: **29.09.2010**
(21) Anmeldenummer: 05774165.4
(22) Anmeldetag: 08.07.2005
(51) Int. Cl.: F16L 27/12, A47L 9/24

(54) **TELESKOPROHR**
TELESCOPIC TUBE
TUBE TELESCOPIQUE

(30) Priorität: 14.07.2004 DE 102004034023
(43) Veröffentlichungstag der Anmeldung: 04.04.2007
(73) Patentinhaber: BSH Bosch und Siemens Hausgeräte GmbH, 81739 München (DE)
(72) Erfinder: GEIS, Marko, 97640 Oberstreu (DE); ILLIG, Roland, 97618 Heustreu (DE); KLEMM, Joachim, 97616 Bad Neustadt (DE); KRAMMER, Michael, 97659 Burgwallbach (DE)
(86) Internationale Anmeldenummer: PCT/EP2005/053276
(87) Internationale Veröffentlichungsnummer: WO 2006/005729

(56) Entgegenhaltungen:
- DE-A- 10 303 381
- DE-C1- 3 807 028
- DE-U- 6 927 681
- DE-U1- 8 105 705

## Beschreibung

Die Erfindung betrifft ein Teleskoprohr gemäß dem Oberbegriff des Anspruchs 1 und einen Staubsauger mit einem erfindungsgemäßen Teleskoprohr.

Die Herstellung von Teleskoprohren ist in der Regel für große Stückzahlen ausgelegt, was eine produktionstechnische Optimierung des Produktes in dieser Hinsicht erfordert. Gleichzeitig sollte das Produkt in hohem Maße anwender- und handhabungsfreundlich gestaltet sein. Gemäß dem Stand der Technik gibt es verschiedene Möglichkeiten, die Verbindung der einzelnen Teleskoprohrelemente miteinander auszuführen.

Die DE 810 57 05 U offenbart eine Feststellvorrichtung für ein in einem Standrohr geführtes Ausziehrohr mittels einer Klemm-Muffen-Anordnung. Diese Anordnung umfasst eine Spannbuchse und eine Klemmbuchse, wobei die Spannbuchse ein Gewinde und die Klemmbuchse ein entsprechendes Gegengewinde aufweisen.

In ähnlicher Weise lehrt die DE 322 77 97 A1 eine Verbindungsmöglichkeit zweier Teleskoprohrstücke derart, dass ein Ende des äußeren Rohres einen Mantelabschnitt mit einem Gewinde aufweist, auf den ein Klemmstück mit einem entsprechenden Gegengewinde aufgeschoben wird.

Die DE 692 76 81 U zeigt weiterhin eine gattungsgemäße Teleskoprohrkupplung, bei der ein an einem äußeren Rohr befestigter Klemmring Klemmnasen besitzt, welche von einem Gewindering gegen ein inneres Rohr gedrückt werden.

Bei den Systemen des Standes der Technik ist der Nachteil zu verzeichnen, dass die über Gewinde- und Gegengewinde zu verbindenden Elemente der Rohrkupplungen aufwändig zu fertigen sind. Weiterhin ist die Handhabung der Kupplungen aufgrund der offenbarten Schraubgewinde mitunter unkomfortabel.

Der Erfindung liegt die Aufgabe zugrunde, die Nachteile des Standes der Technik zu beseitigen und insbesondere ein Teleskoprohr zur Verfügung zu stellen, das produktionstechnisch leicht zu fertigen und für den Benutzer gut zu handhaben ist.

Diese Aufgabe wird mit den Merkmalen gemäß Anspruch 1 gelöst.

Vorteilhafte Ausgestaltungen und Weiterbildungen der Erfindung ergeben sich aus den abhängigen Ansprüchen.

Die Erfindung baut auf der gattungsgemäßen Vorrichtung dadurch auf, dass eines der Führungselemente eine Führungsbahn mit einer Komponente in axialer Richtung umfasst und dass das andere Führungselement mindestens einen in die Führungsbahn eingreifenden Gleitstein umfasst. Das Ausbilden eines der Führungselemente als Führungsbahn und des anderen Führungselementes als in diese Führungsbahn eingreifenden Gleitstein erleichtert sowohl die Herstellung als auch die Benutzung des Teleskoprohres. Der mit der Führungsbahn zusammenwirkende Gleitstein erstreckt sich in Umfangsrichtung lediglich auf einem Teil des vollen Umfangs. Dies reduziert in herstellungstechnischer Hinsicht die Komplexität des das Führungselement tragenden Bauteils. Des Weiteren kann unter Umständen durch das eventuell geringere Volumen des den Gleitstein aufweisenden Bauelements eine Kostenreduzierung erreicht werden. Darüber hinaus kann die Ausgestaltung der Führungsbahn hinsichtlich ihrer Anordnung auf dem die Führungsbahn tragenden Bauteil relativ frei gewählt werden. Es kann so beispielsweise eine gleichförmige Steigung der Führungsbahn in axialer Richtung realisiert werden, je nach Ausgestaltung des Gleitsteins können aber auch davon abweichende Anordnungen der Führungsbahn eingesetzt werden. Auf diese Weise kann die bei einer Drehung in Umfangsrichtung veranlasste axiale Verschiebung des Gleitsteins innerhalb der Führungsbahn wesentlich freier als im Stand der Technik gestaltet werden. Dies erlaubt eine Anpassung der Funktionalität derart, dass eine verbesserte Handhabung für den Benutzer erreicht wird.

Weiter ist bei der erfindungsgemäßen Vorrichtung Vorgesehen, dass zumindest der dem zweiten Rohrelement zuzuwendende Endbereich der Manschette im Innenbereich ein im Vergleich zu anderen Bereichen der Manschette reibungserhöhendes Material aufweist. Das reibungserhöhende Material hemmt insbesondere die axiale Verschiebbarkeit des zweiten Rohrelements innerhalb des ersten Rohrelements zusätzlich, wenn die Hülse auf die Manschette radial nach innen gerichtete Kräfte ausübt, um beide Rohrelemente relativ zueinander zu arretieren.

In einer bevorzugten Ausführungsform ist vorgesehen, dass das erste Führungselement die Führungsbahn umfasst. Das Anordnen der Führungsbahn am ersten Führungselement und damit an der Manschette bedeutet gleichzeitig, dass der in die Führungsbahn eingreifende Gleitstein an der Hülse angeordnet ist. Da die über die Manschette schiebbare Hülse in der Regel das bevorzugt vom Benutzer handzuhabende Bauteil darstellt, lässt der sich in Umfangsrichtung über weniger als einen Umfang erstreckende Gleitstein eine relativ große gestalterische Freiheit für die Hülse. Diese kann somit vorrangig unter Handhabungsgesichtspunkten konstruiert werden, was insgesamt zu einer verbesserten Benutzerfreundlichkeit des Teleskoprohres führt.

Weiterhin kann in einer Ausführungsform vorgesehen sein, dass zumindest der dem zweiten Rohrelement zuzuwendende Endbereich der Manschette eine sich konisch zum Ende hin verjüngende Außenfläche aufweist. Die Konizität des sich dem zweiten Rohrelement zuwendenden Endbereichs der Manschette bewirkt bei einer axialen Verschiebung der Hülse von diesem Endbereich auf die Manschette zwischen der Hülse und der Manschette radial wirkende Kräfte, die zusammen mit einer geeigneten Beschaffenheit der Manschette Kräfte zwischen der Manschette und dem zweiten Rohrelement bewirken. Diese bewirken eine Hemmung beziehungsweise Fixierung der Rohrelemente relativ zueinander bezüglich einer axialen Verschiebung. Durch diese einfache geometrische Ausgestaltung wird eine leicht zu handhabende Bedienung des Teleskoprohres ermöglicht.

Des Weiteren kann ebenfalls vorgesehen sein, dass zumindest der dem zweiten Rohrelement zuzuwendende Endbereich der Hülse eine sich konisch zum Ende hin verjüngende Innenfläche aufweist. Die Konizität des Bauelements Manschette kann in analoger Weise auch auf das Bauelement Hülse angewendet werden und dort zu vergleichbaren Resultaten führen.

Es kann ebenfalls in vorteilhafter Weise vorgesehen sein, dass das der Manschette zugeordnete erste Führungselement auf einen dem ersten Rohrelement zugewandten Bereich begrenzt ist. Die Eingrenzung des für das erste Führungselement zur Verfügung stehenden Bereichs auf der Manschette auf einen dem ersten Rohrelement zugewandten Bereich lässt gleichzeitig einen dem zweiten Rohrelement zugewandten Bereich frei. Dieser kann vorzugsweise so ausgestaltet werden, dass er für die Aufnahme und Weitergabe der von der Hülse verursachten Kräfte besonders geeignet ist. Da sich auf diesem, dem zweiten Rohrelement zugewandten Bereich kein Führungselement befindet, kann durch diese Entkopplung von Eigenschaften eine produktionstechnische und funktionsmäßige Optimierung durchgeführt werden.

Gemäß einer weiteren vorteilhaften Ausführungsform kann vorgesehen sein, dass der dem zweiten Rohrelement zuzuwendende Endbereich der Manschette sich in im Wesentlichen axialer Richtung erstreckende Unterbrechungen aufweist. Durch diese sich in axialer Richtung erstreckenden Unterbrechungen bilden sich in radialer Richtung bewegliche Laschen heraus. Diese Laschen stellen eine besonders geeignete Möglichkeit dar, die von der Hülse ausgeübten radialen Kräfte an das zweite Rohrelement weiterzuleiten und so für eine sichere Verbindung zwischen dem ersten und dem zweiten Rohrelement zu sorgen.

Insbesondere kann eine weitere Ausführungsform so ausgestattet sein, dass der dem zweiten Rohrelement zuzuwendende Endbereich der Manschette Ausnehmungen aufweist. Derartige Ausnehmungen stellen eine von der Materialeigenschaft unabhängige Möglichkeit dar, die radiale Beweglichkeit dieses Endbereichs der Manschette zu beeinflussen. Es ist insbesondere vorteilhaft, wenn diese Ausnehmungen mit den vorhergehend erwähnten Unterbrechungen zusammenwirken und so für eine wohl definierte radiale Weitergabe der durch die Hülse ausgeübten Kräfte bei gleichzeitiger produktionstechnisch einfacher Realisierung und einfacher Handhabbarkeit sorgen.

Des Weiteren kann eine Ausführungsform dadurch vorteilhaft weitergebildet sein, dass zwei Gleitsteine vorgesehen sind. Eine mit zwei Gleitsteinen versehene Ausführungsform ist hinsichtlich der Benutzerfreundlichkeit vorteilhaft, da so eine zuverlässige Führung des Bauelements innerhalb der mit dem Gleitstein zusammenwirkenden Führungsbahn gewährleistet ist.

In einer alternativen Ausführungsform kann vorgesehen sein, dass genau ein Gleitstein vorgesehen ist. Eine derartige Ausführungsform erlaubt eine insbesondere hinsichtlich produktionstechnischer Gesichtspunkte optimierte Konstruktion des Teleskoprohres.

Die Erfindung betrifft weiterhin einen Staubsauger mit einem Teleskoprohr nach einem der vorangehenden Ansprüche.

Der Erfindung liegt die Erkenntnis zugrunde, dass eine kontrollierte axiale Verschiebbarkeit einer Hülse relativ zu einer Manschette, um radial nach innen gerichtete Kräfte der Hülse auf die Manschette zu übertragen, in produktionstechnisch vorteilhafter und anwendungsfreundlicher Weise durch einen oder mehrere in einer Führungsbahn geführte Gleitsteine realisiert werden kann. Dies ermöglicht zum einen eine relativ freie Anordnung der Führungsbahn beispielsweise auf dem Manschettenmantel. Gleichzeitig kann die Herstellung von Hülse und Manschette in produktionstechnischer Hinsicht optimiert werden.

Die Erfindung wird nun unter Bezugnahme auf die beigefügten Zeichnungen anhand bevorzugter Ausführungsformen beispielhaft erläutert. Es zeigen:
- Figuren 1a und: 1b eine Draufsicht und eine Querschnittansicht einer erfindungsgemä- ßen ersten Ausführungsform;
- Figuren 2a bis 2c: eine perspektivische Ansicht und Draufsichten einer Manschette einer erfindungsgemäßen ersten Ausführungsform;
- Figuren 3a und 3b: Querschnittsansichten einer Hülse einer erfindungsgemäßen ersten Ausführungsform;
- Figuren 4a und 4b: eine Draufsicht und eine Querschnittsansicht einer Manschette ei- ner erfindungsgemäßen zweiten Ausführungsform;
- Figuren 5a und 5b: eine Draufsicht und eine Querschnittsansicht einer Hülse einer er- findungsgemäßen zweiten Ausführungsform.

Bei der nachfolgenden Beschreibung der Zeichnungen bezeichnen gleiche Bezugszeichen gleiche oder vergleichbare Komponenten.

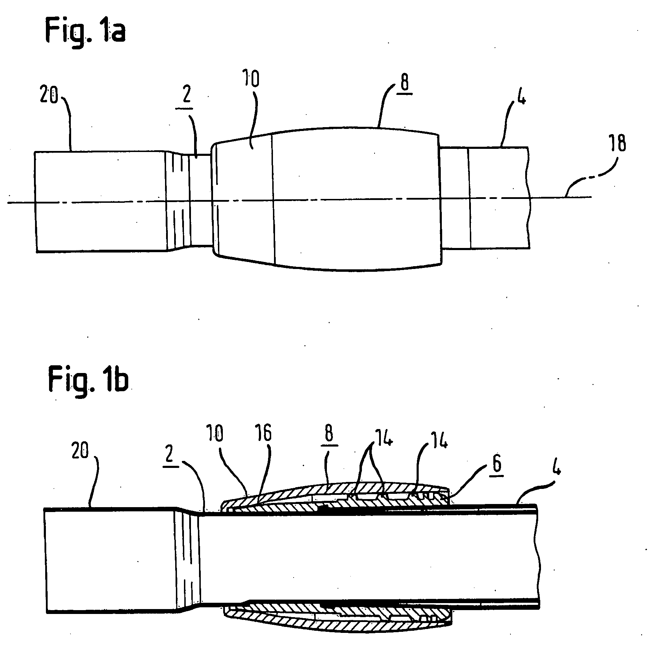

Die Figuren 1 a und 1b zeigen eine Draufsicht und eine Querschnittsansicht einer erfindungsgemäßen ersten Ausführungsform. Die Ausführungsform besteht aus einem Teleskoprohr, das ein inneres Rohr 2 und ein äußeres Rohr 4 aufweist. Das innere Rohr 2 besitzt in dem Bereich, mit dem es sich im äußeren Rohr 4 befinden kann, einen Außendurchmesser, der kleiner ist als der Innendurchmesser des äußeren Rohres 4. Das innere und das äußere Rohr sind über eine Kupplung miteinander verbunden, die eine Manschette 6 und einer Hülse 8 aufweist. Das dem inneren Rohr 2 zuzuwendende Ende der Hülse 8 weist einen sich konisch verjüngenden Bereich 10 auf. Die Manschette 6 ist in einen Bereich 12 aufgeteilt, der einen Gewindesteg 14 trägt und der das äußere Rohr 4 umfängt, sowie in einen Bereich 16, der an der äußeren Mantelfläche des inneren Rohres 2 aufliegt. Das innere Rohr 2 weist an dem dem äußeren Rohr 4 abgewandten Ende einen Bereich 20 auf, dessen Außendurchmesser größer ist als der Innendurchmesser des äußeren Rohres 4. Die Hülse 8 greift mittels zweier Gleitsteine 22 im Bereich 12 der Manschette 6 in die Zwischenräume zwischen den Gewindestegen 14 ein.

Das innere Rohr 2 verläuft parallel zum äußeren Rohr 4 und lässt sich parallel zum äußeren Rohr 4 entlang der Achse 18 verschieben. Der größere Durchmesser des inneren Rohres im Bereich 20 verhindert ein vollständiges Zusammenschieben der beiden Rohre. Die Hülse 8 ist in Umfangsrichtung um die Achse 18 drehbar und wird mittels der Gleitsteine 22 im Gewindebereich 12 der Manschette 6 geführt. Wird die Hülse 8 so in Umfangsrichtung um die Achse 18 gedreht, dass sie sich in Richtung äußeres Rohr 4 bewegt, bewegt sich bei diesem Zuschrauben der konisch verjüngte Bereich 10 in Richtung des am inneren Rohr 2 anliegenden Bereichs 16 der Manschette 6. Nach einer erfolgten Berührung des Bereichs 10 der Hülse 8 mit Bereich 16 der Manschette 6 übt der konische Bereich 10 bei fortgesetzter Drehung der Hülse 8 eine radial nach innen gerichtete Kraft auf den Bereich 16 der Manschette 6 aus. Auf diese Weise wird eine kraftflüssige Verbindung zwischen dem inneren Rohr 2 mit dem äußeren Rohr 4 erreicht. Diese Verbindung wird vom äußeren Rohr 4 über die Manschette 6 und die Hülse 8 an das innere Rohr 2 vermittelt. In den folgenden Figuren wird der detaillierte Aufbau der Manschette 6 und der Hülse 8 dargelegt.

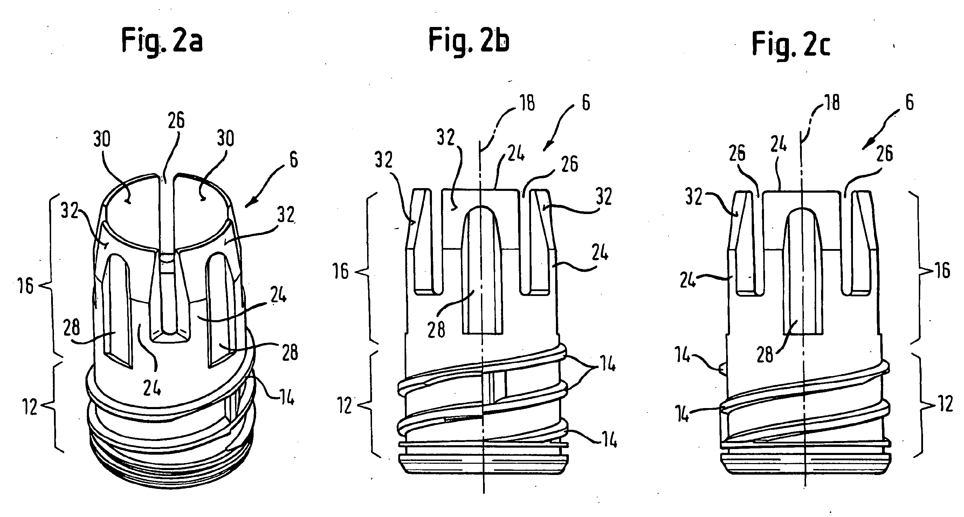

Die Figuren 2a bis 2c zeigen eine perspektivische Ansicht und Draufsichten einer Manschette einer erfindungsgemäßen ersten Ausführungsform. Die Manschette 6 besteht aus einem Gewinde mit einem Gewindesteg 14 aufweisenden Bereich 12 sowie einem Bereich 16, der Laschen 24 aufweist. Der Gewindesteg 14 umläuft die Manschette 6 durchgehend. Die Laschen 24 ergeben sich aufgrund von Längsschlitzen 26, die in axialer Richtung verlaufend die Laschen 24 voneinander separieren. Des Weiteren besitzen die Laschen 24 Ausnehmungen 28. Die Innenseiten 30 der Laschen 24 sind mit einem Material beschichtet, das einen erhöhten Reibungskoeffizienten aufweist. Dieses kann beispielsweise ein Elastomer, Silikon oder TPE umfassen. Die Laschen 24 sind an der dem inneren Rohr 2 zugewandten Seite durch Abschrägungen 32 in ihrer Dicke reduziert.

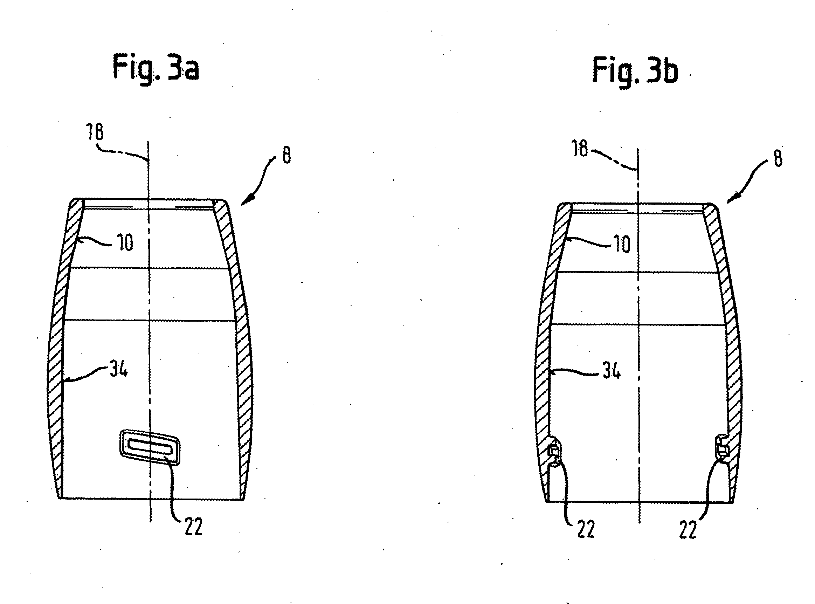

Die Manschette 6 ist im Bereich 12 fest mit der äußeren Mantelfläche des äußeren Rohres 4 verbunden. Im Bereich 16 liegen die Innenflächen 30 der Laschen 24 an der äußeren Mantelfläche des inneren Rohres 2 an. In der durch die Gewindestege 14 gebildeten Führungsbahn werden die Gleitsteine 22 der Hülse 8 (hier nicht abgebildet) geführt. Die Ausnehmungen 28 der Laschen 24 beeinflussen die radiale Elastizität der Laschen 24 und ermöglichen gleichzeitig im Zusammenspiel mit den Längsschlitzen 26 eine radiale Beweglichkeit des gesamten Bereichs 16 der Manschette 6. Auf diese Funktionalität wird noch näher in der nachfolgenden Beschreibung zu den Figuren 3a bis 3b eingegangen.

Die Figuren 3a und 3b zeigen Querschnittsansichten einer Hülse einer erfindungsgemäßen ersten Ausführungsform. Die mit der Manschette 6 zusammenwirkende Hülse 8 hat an ihrer Innenseite im Bereich 34 die Form eines Zylinders, in einem dem inneren Rohr 2 zuzuwendenden Bereich 10 hat sie im Wesentlichen die Form eines Kegels. Des Weiteren weist die Hülse 8 zwei Gleitsteine 22 auf. Die Gleitsteine 22 liegen dabei diametral gegenüber an der Innenseite der Hülse 8 im Bereich 34.

Die Hülse 8 wird über die Manschette 6 geschoben, so dass der Bereich 34 im Bereich 12 der Manschette 6 zu liegen kommt, gleichzeitig liegt der Bereich 10 der Hülse 8 am Bereich 16 der Manschette 6 an. Durch Drehung der Hülse 8 um die Achse 18 im Uhrzeigersinn (vom inneren Rohr 2 in Richtung äußeres Rohr 4 blickend) greifen die Gleitsteine 22 in die von den Gewindestegen 14 gebildeten Führungsbahnen. Es sind auch Gewindeverläufe mit entgegengesetzter Steigung denkbar, das heißt ein Linksgewinde anstelle eines Rechtsgewindes. Bei fortgesetzter Umdrehung, d.h. beim Zuschrauben, bewegt sich die Hülse 8 in axialer Richtung in Richtung äußeres Rohr 4. Nach Berührung des konisch sich verjüngenden Bereichs 10 mit den Abschrägungen 32 der Laschen 24 übt die Hülse 8 eine radiale Kraft auf die Laschen 24 aus. Diese Kraft wird von den Innenflächen 30 der Laschen 24 auf die Mantelfläche des inneren Rohres 2 weitergegeben. Auf diese Weise wird eine axiale Verschiebung des inneren Rohres 2 relativ zum äußeren Rohr 4 beziehungsweise relativ zur Manschette 6 gehemmt. Der erhöhte Reibungskoeffizient der Flächen 30 unterstützt diese hemmende Wirkung zusätzlich.

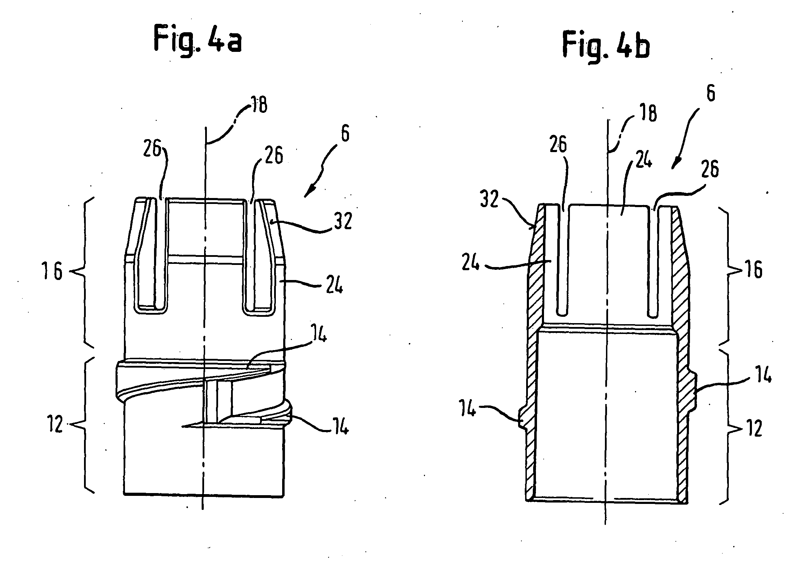

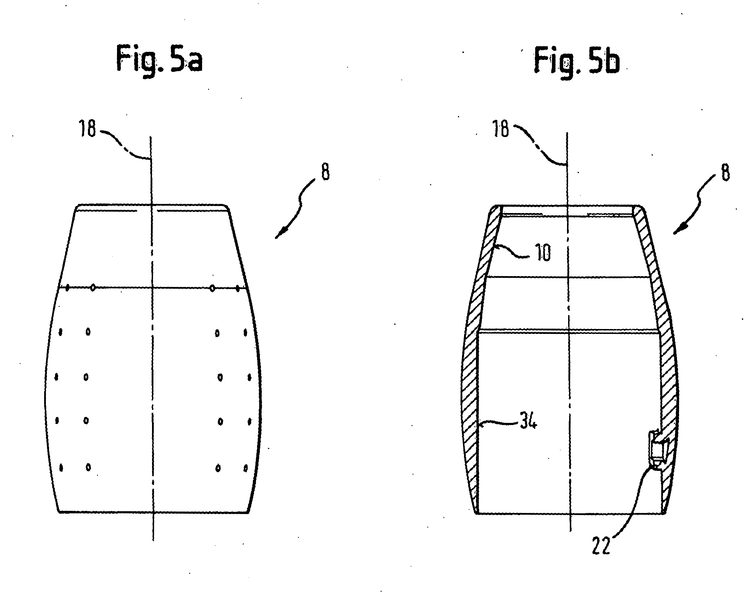

Die Figuren 4a und 4b zeigen eine Draufsicht und eine Querschnittsansicht einer Manschette einer erfindungsgemäßen zweiten Ausführungsform. Die gemäß der zweiten Ausführungsform abgebildete Manschette 6 weist im Unterschied zur Manschette 6 der ersten Ausführungsform an dem dem inneren Rohr 2 zuzuwendenden Ende Laschen 24 auf, die massiv gestaltet sind, d. h. keine Ausnehmungen aufweisen. Gleichwohl sind die Laschen an dem dem inneren Rohr 2 zuzuwendenden Ende abgeschrägt (Schrägen 32) und durch Unterbrechungen 26 voneinander getrennt. Im Bereich 12 der Manschette 6 ist wiederum ein Gewindesteg 14 angeformt, dessen Zwischenraum als Führungsbahn für den Gleitstein 22 der Hülse 8 (hier nicht abgebildet) dient. Die Funktionalität der Manschette 6 wird im Zusammenhang mit der Beschreibung zu den Figuren 5a und 5b erläutert.

Die Figuren 5a und 5b zeigen eine Draufsicht und eine Querschnittsansicht einer Hülse einer erfindungsgemäßen zweiten Ausführungsform. In Figur 5a ist eine Außenansicht der Hülse 8 abgebildet. Die Mantelfläche der Hülse 8 kann frei unter Handhabungsgesichtspunkten gestaltet werden. So können auch beispielsweise für den Außenbereich Weichkunststoffe verwendet werden, um eine vorteilhafte Handhabung zu erreichen. Die Hülse 8 ist im Innenbereich wiederum wie bei der ersten Ausführungsform in einen zylindrischen Bereich 34 gegliedert, der einen Gleitstein 22 aufweist. Daran schließt sich an dem dem inneren Rohr zuzuwendenden Ende ein konisch sich verjüngender Bereich 10 an. Die Funktionalität des Bereichs 10 im Zusammenwirken mit den Abschrägungen 32 der Laschen 24 gestaltet sich analog wie in der Beschreibung zu den Figuren 3a und 3b erläutert. Im Unterschied zur Hülse der ersten Ausführungsform weist die Hülse 8 gemäß den Figuren 5a und 5b lediglich einen Gleitstein 22 auf. Dies ermöglicht eine weitere Reduzierung des Materialaufwands bei gleichbleibender Funktionalität.

### Bezugszeichenllste

- 2: inneres Rohr
- 4: äußeres Rohr
- 6: Manschette
- 8: Hülse
- 10: konische Innenfläche
- 12: Gewindebereich
- 14: Gewindesteg
- 16: Laschenbereich
- 18: Längsachse
- 20: Abschlussende des inneren Rohrs
- 22: Gleitstein
- 24: Lasche
- 26: Längsschlitz
- 28: Ausnehmung
- 30: Innenfläche
- 32: Abschrägung
- 34: zylindrische Innenfläche

## Patentansprüche

1. Teleskoprohr, insbesondere für einen Staubsauger, mit
- mindestens einem ersten (4) und einem zweiten (2) Rohrelement, wobei das erste Rohrelement (4) zumindest teilweise über das zweite Rohrelement (2) schiebbar ist,
- einer Manschette (6), die an einem Endbereich des ersten Rohrelementes (4) befestigt ist und mindestens ein erstes Führungselement (14) aufweist,
- einer Hülse (8), die über die Manschette (6) schiebbar ist und mindestens ein zweites Führungselement (22) aufweist,
- wobei die Hülse (8) relativ zu der Manschette (6) in Umfangsrichtung drehbar ist und ein Zusammenwirken der Führungselemente (14, 22) eine axiale Verschiebung der Hülse (8) relativ zu der Manschette (6) aufgrund einer Drehung in Umfangsrichtung veranlasst,
- wobei aufgrund der axialen Verschiebung der Hülse (8) relativ zu der Manschette (6) Kräfte zwischen der Hülse (8) und der Manschette (6) sowie zwischen der Manschette (6) und dem zweiten Rohrelement (2) wirken, so dass die Rohrelemente (2, 4) relativ zueinander zumindest bezüglich einer axialen Verschiebung fixiert werden,
- wobei eines der Führungselemente (14, 22) eine Führungsbahn mit einer Komponente in axialer Richtung umfasst, und
- wobei das andere Führungselement (14, 22) mindestens einen in die Führungsbahn eingreifenden Gleitstein (22) umfasst,
- **dadurch gekennzeichnet,**
- **dass** zumindest der dem zweiten Rohrelement (2) zuzuwendende Endbereich (16) der Manschette (6) im Innenbereich (30) ein im Vergleich zu anderen Bereichen der Manschette reibungserhöhendes Material aufweist.

2. Teleskoprohr nach Anspruch 1, **dadurch gekennzeichnet, dass** das erste Führungselement (14) die Führungsbahn umfasst.

3. Teleskoprohr nach Anspruch 1 oder 2, **dadurch gekennzeichnet, dass** zumindest der dem zweiten Rohrelement (2) zuzuwendende Endbereich der Manschette (6) eine sich konisch zum Ende hin verjüngende Außenfläche (32) aufweist.

4. Teleskoprohr nach einem der vorhergehenden Ansprüche, **dadurch gekennzeichnet, dass** zumindest der dem zweiten Rohrelement (2) zuzuwendende Endbereich der Hülse (8) eine sich konisch zum Ende hin verjüngende Innenfläche (10) aufweist.

5. Teleskoprohr nach einem der vorhergehenden Ansprüche, **dadurch gekennzeichnet, dass** das der Manschette zugeordnete erste Führungselement (14) auf einen dem ersten Rohrelement (4) zugewandten Bereich (12) begrenzt ist.

6. Teleskoprohr nach einem der vorhergehenden Ansprüche, **dadurch gekennzeichnet, dass** der dem zweiten Rohrelement (2) zuzuwendende Endbereich (16) der Manschette (6) sich in im Wesentlichen axialer Richtung erstreckende Unterbrechungen (26) aufweist.

7. Teleskoprohr nach einem der vorhergehenden Ansprüche, **dadurch gekennzeichnet, dass** der dem zweiten Rohrelement (2) zuzuwendende Endbereich (16) der Manschette (6) Ausnehmungen (28) aufweist.

8. Teleskoprohr nach einem der vorhergehenden Ansprüche, **dadurch gekennzeichnet, dass** zwei Gleitsteine (22) vorgesehen sind.

9. Teleskoprohr nach Anspruch 1 bis 7**, dadurch gekennzeichnet, dass** genau ein Gleitstein (22) vorgesehen ist.

10. Staubsauger mit einem Teleskoprohr nach einem der vorangehenden Ansprüche.

## Claims

1. Telescopic pipe, in particular for a vacuum cleaner, comprising
- at least one first pipe element (4) and second pipe element (2), wherein the first pipe element (4) can be pushed at least partly over the second pipe element (2),
- a collar (6) which can be fastened to an end region of the first pipe element (4) and has at least one first guide element (14),
- a sleeve (8) which can pushed over the collar (6) and has at least one second guide element (22),
- wherein the sleeve (8) is rotatable relative to the collar (6) in circumferential direction and a co-operation of the guide elements (14, 22) due to rotation in circumferential direction causes an axial displacement of the sleeve (8) relative to the collar (6),
- wherein due to the axial displacement of the sleeve (8) relative to the collar (6) forces act between the sleeve (8) and the collar (6) and between the collar (6) and the second pipe element (2) so that the pipe elements (2, 4) are fixed relative to one another at least with respect to an axial displacement,
- wherein one of the guide elements (14, 22) has a guide track with a component in axial direction and
- wherein the other guide element (14, 22) has at least one slide block (22) engaging in the guide track,
- **characterised in that** at least the end region (16), which is to face towards the second pipe element (2), of the collar (6), has in the inner region (30) a material which increases friction by comparison with other regions of the collar.

2. Telescopic pipe according to claim 1, **characterised in that** the first guide element (14) has the guide track.

3. Telescopic pipe according to claim 1 or 2, **characterised in that** at least the end region, which is to face towards the second pipe element (2), of the collar (6) has an outer surface (32) conically tapering towards the end.

4. Telescopic pipe according to any one of the preceding claims, **characterised in that** at least the end region, which is to face towards the second pipe element (2), of the sleeve (8) has an inner surface (10) conically tapering towards the end.

5. Telescopic pipe according to any one of the preceding claims, **characterised in that** the first guide element (14) associated with the collar is bounded at a region (12) facing the first pipe element (4).

6. Telescopic pipe according to any one of the preceding claims, **characterised in that** the end region (16), which is to face towards the second pipe element (2), of the collar (6) has interruptions (26) extending substantially in axial direction.

7. Telescopic pipe according to any one of the preceding claims, **characterised in that** the end region (16), which is to face towards the second pipe element (2), of the collar (6) has recesses (28).

8. Telescopic pipe according to any one of the preceding claims, **characterised in that** two slide blocks (22) are provided.

9. Telescopic pipe according to any one of claims 1 to 7, **characterised in that** exactly one slide block (22) is provided.

10. Vacuum cleaner with a telescopic pipe according to any one of the preceding claims.

## Revendications

1. Tube télescopique, notamment pour un aspirateur, comprenant
- au moins un premier (4) et un second (2) éléments de tube, le premier élément de tube (4) étant coulissant au moins en partie sur le second élément de tube (2),
- une manchette (6) qui est fixée sur une partie terminale du premier élément de tube (4) et présente au moins un premier élément de guidage (14),
- une douille (8) qui est coulissable sur la manchette (6) et présente au moins un deuxième élément de guidage (22),
- la douille (8) étant rotative dans le sens circonférentiel par rapport à la manchette (6) et une action réciproque des éléments de guidage (14, 22) causant un coulissement axial de la douille (8) par rapport à la manchette (6) en raison d'une rotation dans le sens circonférentiel,
- des forces agissant entre la douille (8) et la manchette (6) ainsi qu'entre la manchette (6) et le second élément de tube (2) en raison du coulissement axial de la douille (8) par rapport à la manchette (6), de sorte que les éléments de tube (2, 4) sont fixés de manière relative l'un par rapport à l'autre en ce qui concerne un coulissement axial,
- l'un des éléments de guidage (14, 22) comprenant une glissière munie d'une composante en direction axiale, et
- l'autre élément de guidage (14, 22) comprenant au moins un coulisseau (22) ayant prise dans la glissière,
**caractérisé en ce**
**qu'**au moins la partie terminale (16), tournée vers le second élément de tube (2), de la manchette (6) présente dans la partie intérieure (30) un matériau augmentant la friction en comparaison avec d'autres parties de la manchette.

2. Tube télescopique selon la revendication 1, **caractérisé en ce que** le premier élément de guidage (14) comprend la glissière.

3. Tube télescopique selon la revendication 1 ou 2, **caractérisé en ce qu'**au moins la partie terminale, tournée vers le second élément de tube (2), de la manchette (6) présente une surface extérieure (32) se rétrécissant de manière conique vers l'extrémité.

4. Tube télescopique selon l'une quelconque des revendications précédentes, **caractérisé en ce qu'**au moins la partie terminale, tournée vers le second élément de tube (2), de la douille (8) présente une surface intérieure (10) se rétrécissant de manière conique vers l'extrémité.

5. Tube télescopique selon l'une quelconque des revendications précédentes, **caractérisé en ce que** le premier élément de guidage (14) attribué à la manchette est limité à une partie (12) tournée vers le premier élément de tube (4).

6. Tube télescopique selon l'une quelconque des revendications précédentes, **caractérisé en ce que** la partie terminale (16), tournée vers le second élément de tube (2), de la manchette (6) présente des ouvertures (26) s'étendant essentiellement en direction axiale.

7. Tube télescopique selon l'une quelconque des revendications précédentes, **caractérisé en ce que** la partie terminale (16), tournée vers le second élément de tube (2), de la manchette (6) présente des évidements (28).

8. Tube télescopique selon l'une quelconque des revendications précédentes, **caractérisé en ce que** deux coulisseaux (22) sont ménagés.

9. Tube télescopique selon les revendications 1 à 7, **caractérisé en ce qu'**exactement un coulisseau (22) est ménagé.

10. Aspirateur comprenant un tube télescopique selon l'une quelconque des revendications précédentes.
